# EUROPEAN PATENT SPECIFICATION

(11) **EP 2 371 577 B1**
(45) Date of publication and mention of the grant of the patent: **05.12.2012**
(21) Application number: 11159362.0
(22) Date of filing: 23.03.2011
(51) Int. Cl.: B60B 1/04, B60B 21/06

(54) **Positioning ferrule structure for spoke of wheel rim**
Positionierungshülsenstruktur für Speichen einer Radfelge
Positionnement de structure d'embout pour rayon de jante de roue

(30) Priority: 26.03.2010 TW 099109082
(43) Date of publication of application: 05.10.2011
(73) Proprietor: Wang, Yu Ju, Taipei City (TW)
(72) Inventor: Wang, Yu Ju, Taipei City (TW)
(74) Representative: Viering, Jentschura & Partner

(56) References cited:
- DE-A1-102006 035 814
- DE-U1- 20 319 177
- US-A1- 2008 290 721
- US-B1- 6 938 962

## Description

### BACKGROUND OF THE INVENTION

### 1. Field of the Invention

The present invention relates to a positioning ferrule structure for a spoke of a wheel rim.

### 2. Description of the Prior Art

Taiwan Patent No. I325832 discloses a spoke assembly of a wheel rim without an inner tire, which comprises a sleeve which is formed by stamping. One end of the sleeve has a recess to engage with an oblique rectangular flange of a water stop ring. The sleeve has an engaging section which extends from the opening to the oblique rectangular flange. A distal end of the sleeve has a hole with a plurality of cut lines. An inner side of the sleeve has an annular bent portion. The sleeve connected with a spoke is inserted in a hole of a wheel rim.

This structure provides a waterproof effect by the oblique rectangular flange with the water stop ring. The cut lines extends to the inner wall of the oblique rectangular flange. The sleeve can be expanded by the spoke connector. It is labor-saving to maintain and replace the sleeve. The oblique rectangular flange is to reinforce its structure and prevents the sleeve form deformation. However, it is complicated in structure and assembly to have the water stop ring in the oblique rectangular flange. The oblique rectangular flange is large in size, which increases the weight of the wheel rim and influences the appearance.

The engaging section is a single-layer configuration or in a reverse U shape, which doesn't have enough force to clamp the head of the spoke connector, so the spoke connector won't be loosened easily to influence the tension of the spoke. The wheel rim is easy to swing and not steady and has a short service life.

For the spoke connector to have a swing function, a proper allowance is formed between the lower section of the spoke connector and the inner hole of the sleeve after the sleeve after the wheel rim and the spoke connector are assembled and then inserted through the water stop ring in the recess to provide a waterproof function. The sleeve functions as a fulcrum to provide a swing function for the spoke. However, the spoke connector and the sleeve don't have a large contact area, which causes that the wheel rim and the spoke don't have a better conduction. Accordingly, the inventor of the present invention has devoted himself based on his many years of practical experiences to solve these problems.

A positioning ferrule structure for a spoke of a wheel rim is further known from US-A-2008/0290721 comprising a ferrule which is integrally formed by stamping and has a flange which is larger than a hole of a wheel rim and is disposed at an upper end and which has a plurality of longitudinal cut lines to form an engaging section.

### SUMMARY OF THE INVENTION

The primary object of the present invention is to provide a dual-layer ferrule, which has an inner layer to tighten a spoke connector and an outer layer to seal a hole of a wheel rim. The size and weight of the present invention are reduced to be compact.

Another object of the present invention is to provide a dual-layer ferrule, which provides a dual-layer engaging section. It is labor-saving to deform the dual-layer engaging section. The engaging section provides a better tight effect to prevent the spoke connector from looseness. The present invention has a longer service life.

A further object of the present invention is to provide a dual-layer ferrule, which has the inner layer to link the spoke connector for a proper swing. The spoke and the wheel hub can be assembled quickly. The wheel rim and the straight section of the spoke connector have a larger contact area to provide a better conduction and a swing allowance and a waterproof function.

Another object of the present invention is to provide a dual-layer ferrule, which is compact and has a pleasing appearance and is convenient for replacement and can prevent the wheel rim from being scraped.

In order to achieve the aforesaid objects, there is provided a positioning ferrule structure for a spoke of a wheel rim. The ferrule is a hollow dual-layer ferrule and comprises an inner layer and an outer layer which are integrally formed by stamping. The outer layer has an outer flange which is larger than a hole of a wheel rim and disposed at an upper end of the outer layer. The inner layer has an inner flange which is disposed at an upper end of the inner layer and laps over the outer flange. Lower portions of the inner layer and the outer layer are integrally formed and have a plurality of longitudinal cut lines to form a dual-layer engaging section.

### BRIEF DESCRIPTION OF THE DRAWINGS

Fig. 1 is an exploded view according to a first embodiment of the present invention;
Fig. 2 is a cross - sectional view according to the first embodiment of the present invention;
Fig. 3 is a schematic view to show the ferrule in an expanded state;
Fig. 4 is a schematic view showing the wheel rim and the wheel hub;
Fig. 5 is a schematic view showing the spoke connector to disengage from the wheel rim;
Fig. 6 is a schematic view to show that the inner layer and the spoke connector are swung;
Fig. 6-1 is a schematic view showing that the upper end of the inner layer has a flared surface;
Fig. 7 is a schematic view showing a semi-finished wheel rim;
Fig. 8 is a schematic view of a second embodiment of the present invention;
Fig. 9 is a schematic view showing that the inner layer of Fig. 8 has a flared surface;
Fig. 10 is a schematic view of a third embodiment of the present invention;
Fig. 11 is a schematic view showing that the inner layer of Fig. 9 has a flared surface;
Fig. 12 through Fig. 14 are schematic views to show that the inner layer of the ferrule has reinforcement protrusions;
Fig. 15 is a schematic view showing a reinforcement member of the present invention; and
Fig. 16 is a schematic view to show that the inner layer of the ferrule has a clamp portion.

### DETAILED DESCRIPTION OF THE PREFERRED EMBODIMENTS

Embodiments of the present invention will now be described, by way of example only, with reference to the accompanying drawings.

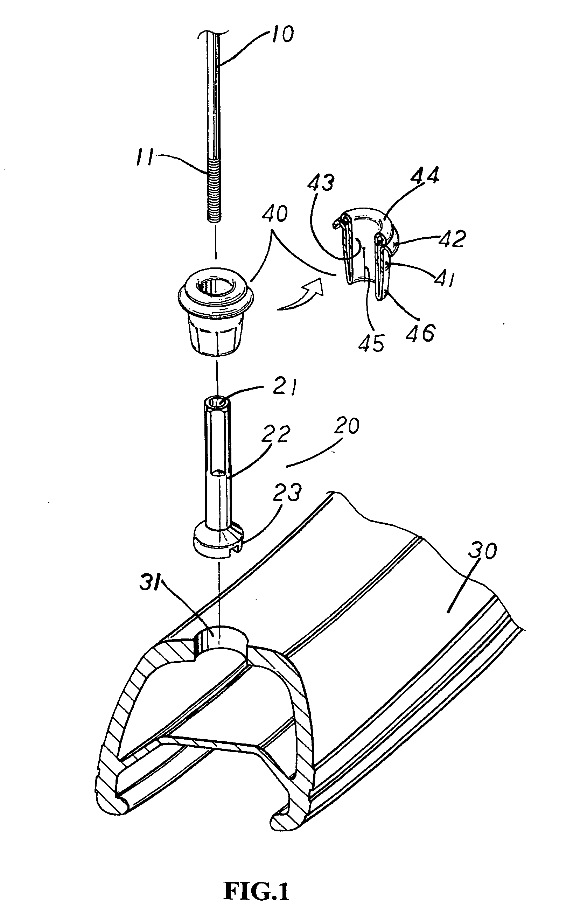

Fig. 1 is an exploded view of the present invention. As shown in Fig. 1, the present invention comprises a wheel rim 30 of a bicycle or a motorcycle and a ferrule 40 which is to engage with a head 23 of a spoke connector 20 when a spoke 10 and the spoke connector 20 are threadedly connected to a hole 31 of the wheel rim 30.

The ferrule 40 is a hollow dual-layer ferrule and comprises an inner layer 43 and an outer layer 41 which are integrally formed by stamping. The outer layer 41 has an outer flange 42 at an upper end thereof to lean against the hole 31 of the wheel rim 30. The inner layer 43 has an inner flange 44 to lap over the outer flange 42. As shown in the drawings, the outer flange 42 has a curve cross-section. The inner flange 44 has a ring shape and laps over the outer flange 42 to form a stepped configuration. Lower portions of the inner layer 43 and the outer layer 41 are integrally formed and have a plurality of longitudinal cut lines 45 to form a dual-layer engaging section 46 for the head 23 of the spoke connector 20 to be positioned thereat. The engaging section 46 of the outer layer 41 has a conical surface which is gradually reduced downward.

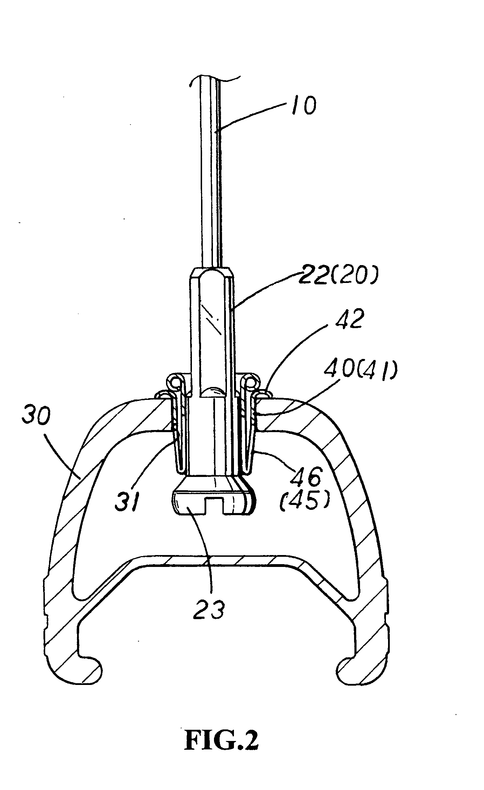

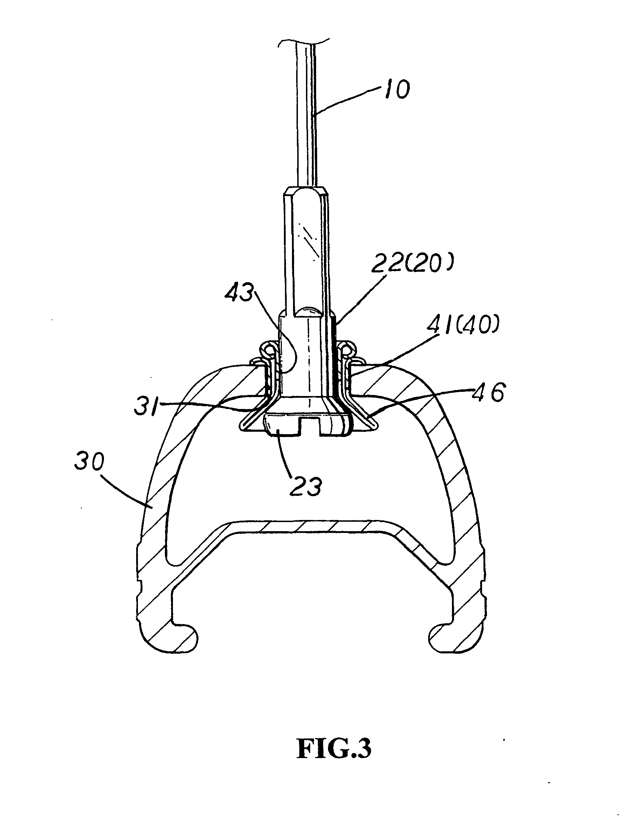

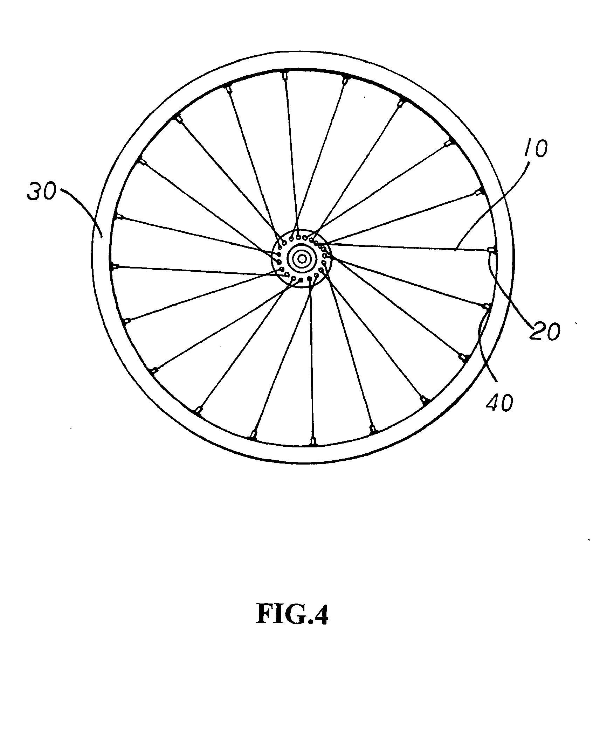

As shown in Fig. 2, the ferrule 40 of the present invention is fitted on a straight section 22 of the spoke connector 20, and the engaging section 46 is pushed towards the head 23 of the spoke connector 20, and the assembly is inserted in the hole 31 of the wheel rim 30. By using an external tool (not shown), the outer flange 42 of the ferrule 40 is against the periphery of the hole 31 of the wheel rim 30 to be positioned. The spoke 10 is pulled out reversely, such that the head 23 of the spoke connector 20 forces the engaging potion 46 having the cut lines 45 to expand outward and to engage with the hole 31 of the wheel rim 30 as shown in Fig. 3. As shown in Fig. 4, the wheel rim is assembled with ease.

As shown in Fig. 3, the ferrule 40 fitted on the spoke connector 20 is a hollow dual-layer configuration. The inner layer 43 of the ferrule 40 elastically tightens the straight section 22 of the spoke connector 20, and the outer layer 41 is against the hole 31 of the wheel rim 30 to seal the hole 31. Compared to the prior art, the size and weight of the present invention are reduced to be compact. It is labor-saving to deform the dual-layer engaging section 46. When the spoke connector moves downward because of vibration of the vehicle, the engaging section 46 will provide a better tight effect to prevent the spoke connector from looseness. This can effectively keep stability of the tension of the spoke and the spoke is durable.

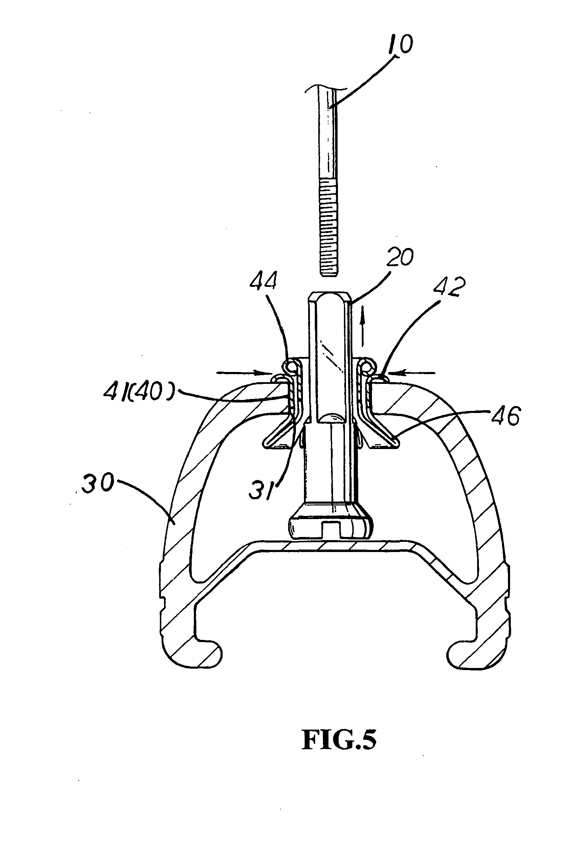

Fig. 5 is a schematic view of the present invention to show replacement of the wheel rim. When the wheel rim 30, spoke 10 and the ferrule 40 are damaged and have to be replaced, the spoke connector 20 of the spoke 10 is pushed inward so that the spoke connector 20 disengages from the engaging section 46 of the ferrule 40. Because the inner flange 44 of the ferrule 40 is higher than the outer flange 42, the tool can clamp the ferrule 40 to move the ferrule 40 upward in the arrow direction from the hole 31 of the wheel rim 30. This facilitates maintenance and replacement of the ferrule 40 and consumers can do it yourself. Besides, the configuration of the inner flange 44 and the outer flange 42 can prevent the inner wall of the wheel rim 30 from being scraped and reduce its size to have a pleasing appearance.

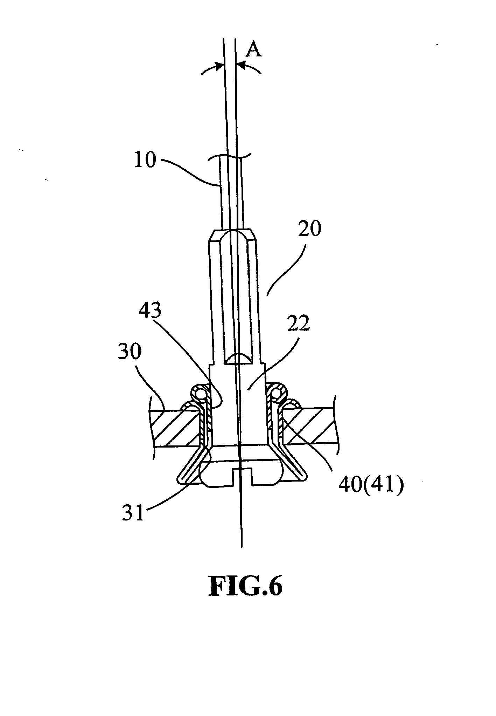

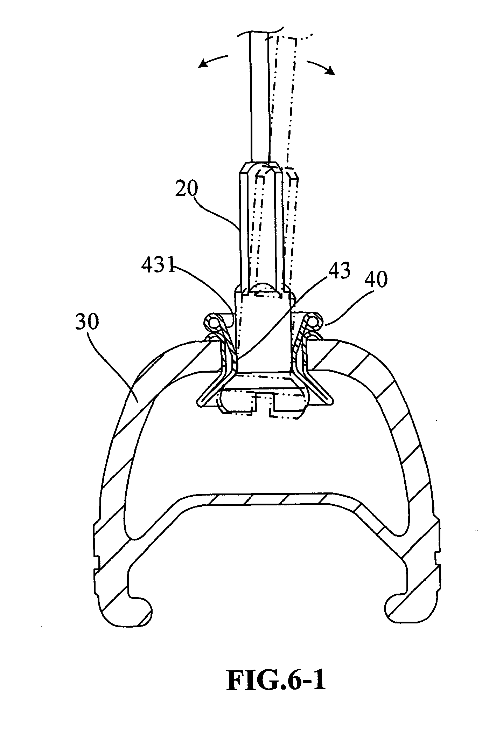

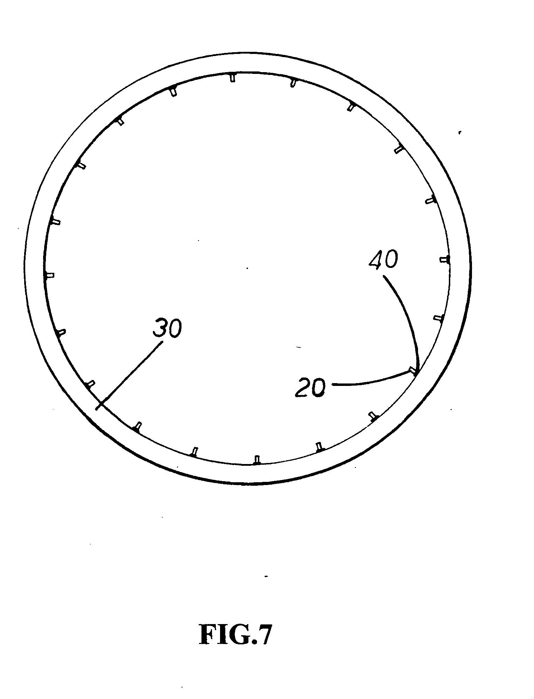

As shown in Fig. 6, the hollow dual-layer configuration of the ferrule 40 of the present invention provides a better waterproof effect to the hole 31 of the wheel rim 30 and the spoke connector 20. A space is formed between the inner layer 43 and the outer layer 41 for deformation. The inner layer 43 and the straight section 22 of the spoke connector 20 are engaged with each other and have allowance A for swing of the spoke connector 20. The spoke can be connected to the wheel hub quickly and conveniently. The wheel rim as shown in Fig. 4 has a better swing allowance and better conductive and waterproof functions. As shown in Fig. 6-1, the inner layer 43 of the ferrule 40 has a flared surface 431 for swing of the spoke connector 20 to assemble a complete wheel rim as shown in Fig. 4. Alternatively, as shown in Fig. 7, the ferrule 40 fitted on the spoke connector 20 and the wheel rim 30 form a semi-finished product.

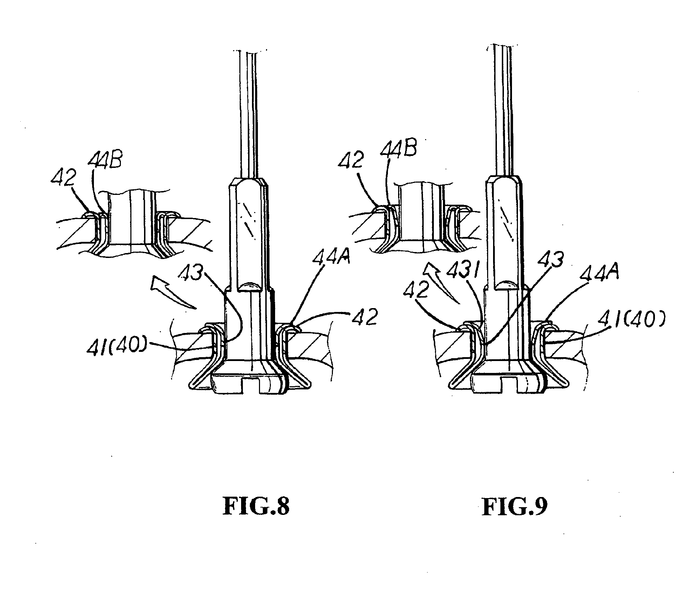

As shown in Fig. 8 and Fig. 9, the inner flange 44A at the upper end of the inner layer 43 of the ferrule 40 or the upper end of the flared surface 431 laps over an upper surface of the outer flange 42. Alternatively, as shown by the arrow, the inner flange 44B is adjacent to the outer flange 42. The inner flange 44B and the outer flange 42 have an equal height.

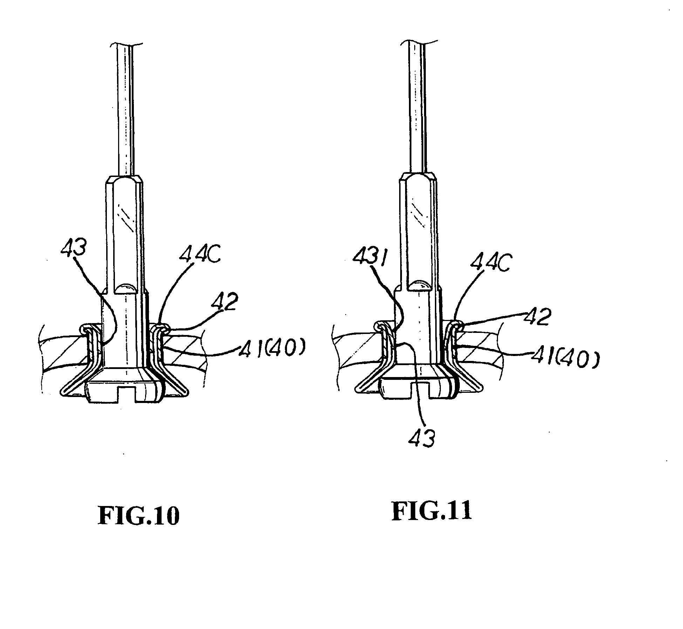

As shown in Fig. 10 and Fig. 11, the inner flange 44C at the upper end of the inner layer 43 of the ferrule 40 or the upper end of the flared surface 431 covers the outer flange 42 at the upper end of the outer layer 41.

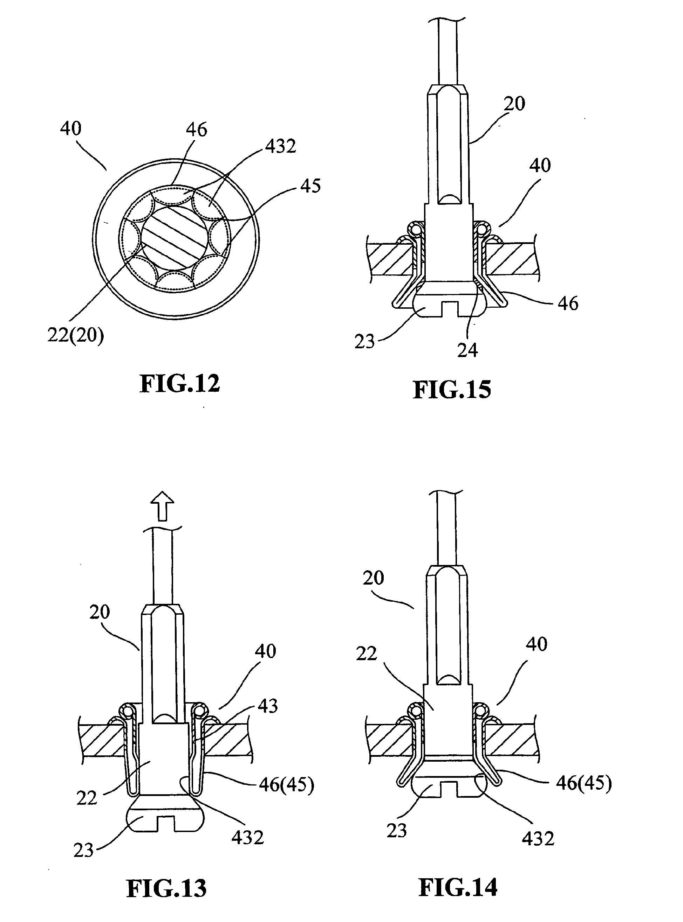

As shown in Fig. 12 through Fig. 14, the ferrule 40 has reinforcement protrusions 432 which are disposed on the inner layer 43 between the cut lines 45 of the engaging section 46 corresponding to the straight section 22 of the spoke connector 20 to reduce the thickness of the ferrule 40 so as to save the material and lighten the ferrule 40. When the ferrule 40 is deformed, the reinforcement protrusions 432 are in contact with the head 23 of the spoke connector 20 to prevent the head 23 from being scraped.

As shown in Fig. 15, an annular reinforcement member 24 is provided between the head 23 of the spoke connector 20 and the engaging section 46 of the ferrule 40.

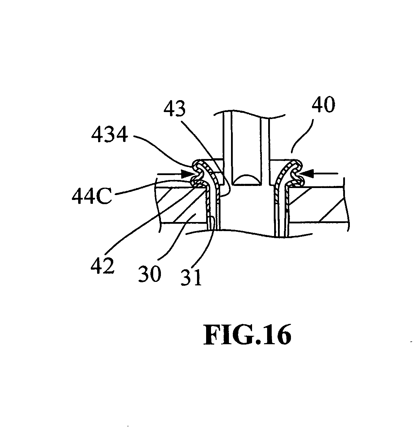

As shown in Fig. 16, the ferrule 40 has a clamping portion 434 disposed at the upper end of the inner layer 43 of the ferrule 40 (or the upper end of the flared surface 431 as shown in Fig. 11) and the inner flange 44C to cover the outer flange 42 and to be positioned at the periphery of the hole 31 of the wheel rim 30.

Although particular embodiments of the present invention have been described in detail for purposes of illustration, various modifications and enhancements may be made without departing from the scope of the present invention. Accordingly, the present invention is not to be limited except as by the appended claims.

## Claims

1. A positioning ferrule structure for a spoke of a wheel rim, comprising a ferrule (40), wherein the ferrule (40) is a hollow dual-layer ferrule and comprises an inner layer (43) and an outer layer (41) which are integrally formed by stamping, the outer layer (41) has an outer flange (42) which is larger than a hole (31) of a wheel rim (30) and disposed at an upper end of the outer layer (41), the inner layer (43) has an inner flange (44) which is disposed at an upper end of the inner layer (43) and laps over the outer flange (42), lower portions of the inner layer (43) and the outer layer (41) are integrally formed and have a plurality of longitudinal cut lines (45) to form a dual-layer engaging section (46).

2. The positioning ferrule structure as claimed in claim 1, wherein the inner flange (44) is smaller than the outer flange (42) and laps over the outer flange (42) to form a stepped configuration.

3. The positioning ferrule structure as claimed in claim 1, wherein the inner flange (44A) is attached to an upper surface of the outer flange (42).

4. The positioning ferrule structure as claimed in claim 1, wherein the inner flange (44B) is adjacent to the outer flange (42), and the inner flange (44B) and the outer flange (42) have an equal height.

5. The positioning ferrule structure as claimed in claim 1, wherein the inner flange (44C) covers the outer flange (42).

6. The positioning ferrule structure as claimed in claim 1, wherein the inner layer (43) has a clamp portion (434) at the upper end thereof and the inner flange (44C) to cover the outer flange (42).

7. The positioning ferrule structure as claimed in claim 1, 2, 3, 4, 5 or 6, wherein the ferrule (40) has reinforcement protrusions (432) which are disposed on the inner layer (43) between the cut lines (45) of the engaging portion (46).

8. The positioning ferrule structure as claimed in claim 1, 2, 3, 4, 5 or 6, wherein an annular reinforcement member (24) is provided between the head (23) of the spoke connector (20) and the engaging section (46).

9. The positioning ferrule structure as claimed in claim 7, wherein an annular reinforcement member (24) is provided between the head (23) of the spoke connector (20) and the engaging section (46).

10. The positioning ferrule structure as claimed in claim 1, 2, 3, 4, 5 or 6, wherein the inner layer (43) has a flared surface (431) at an upper section thereof.

11. The positioning ferrule structure as claimed in claim 7 or 9, wherein the inner layer (43) has a flared surface (431) at an upper section thereof.

12. The positioning ferrule structure as claimed in claim 8, wherein the inner layer (43) has a flared surface (431) at an upper section thereof.

## Patentansprüche

1. Ein Aufbau einer Positionierzwinge für eine Speiche einer Radfelge besteht aus einer Zwinge (40), **dadurch gekennzeichnet, dass** eine Zwinge (40) als eine hohle und doppelschichtige Zwinge gebildet ist und aus einer Innenschicht (43) und einer Außenschicht (41) besteht, die durch Stanzen integral miteinander geformt sind, wobei die Außenschicht (41) einen Außenflansch (42) aufweist, der größer ist als ein Loch (31) einer Radfelge (30) und an einem oberen Ende der Außenschicht (41) gebildet ist; die Innenschicht (43) ist mit einem Innenflansch (44) versehen, der an einem oberen Ende der Innenschicht (43) geformt ist und den Außenflansch (42) überlappt; die unteren Teile der Innenschicht (43) und der Außenschicht (41) integral miteinander gebildet sind und mehrere Längsschnittlinien (45) aufweisen, um ein doppelschichtiges Einrückteil (46) zu bilden.

2. Der Aufbau der Positionierzwinge nach Anspruch 1, **dadurch gekennzeichnet, dass** der Innenflansch (44) kleiner ist als der Außenflansch (42) und diesen Außenflansch (42) überlappt, um eine abgestufte Konfiguration zu bilden.

3. Der Aufbau der Positionierzwinge nach Anspruch 1, **dadurch gekennzeichnet, dass** der Innenflansch (44A) an einer oberen Oberfläche des Außenflansches (42) befestigt ist.

4. Der Aufbau der Positionierzwinge nach Anspruch 1, **dadurch gekennzeichnet, dass** der Innenflansch (44B) neben dem Außenflansch (42) gebildet ist, wobei sowohl der Innenflansch (44B) als auch der Außenflansch (42) dieselbe Höhe aufweisen.

5. Der Aufbau der Positionierzwinge nach Anspruch 1, **dadurch gekennzeichnet, dass** der Außenflansch (42) mit dem Innenflansch (44C) abgedeckt wird.

6. Der Aufbau der Positionierzwinge nach Anspruch 1, **dadurch gekennzeichnet, dass** am oberen Ende der Innenschicht (43) ein Klemmelement (434) und der Innenflansch (44C) gebildet sind, mit dem der Außenflansch (42) abgedeckt wird.

7. Der Aufbau der Positionierzwinge nach Anspruch 1, 2, 3, 4, 5 oder 6, **dadurch gekennzeichnet, dass** die Zwinge (40) mit verstärkenden Vorsprüngen (432) versehen ist, die auf der Innenschicht (43) zwischen den Schnittlinien (45) des Einrückteils (46) gebildet sind.

8. Der Aufbau der Positionierzwinge nach Anspruch 1, 2, 3, 4, 5 oder 6, **dadurch gekennzeichnet, dass** zwischen dem Kopfteil (23) der Speichenbefestigung (20) und dem Einrückteil (46) ein ringförmiges Verstärkungsglied (24) montiert ist.

9. Der Aufbau der Positionierzwinge nach Anspruch 7, **dadurch gekennzeichnet, dass** zwischen dem Kopfteil (23) der Speichenbefestigung (20) und dem doppelschichtigen Einrückteil (46) ein ringförmiges Verstärkungsglied (24) montiert ist.

10. Der Aufbau der Positionierzwinge nach Anspruch 1, 2, 3, 4, 5 oder 6, **dadurch gekennzeichnet, dass** an einem oberen Teil der Innenschicht (43) eine ausladende Oberfläche (431) gebildet ist.

11. Der Aufbau der Positionierzwinge nach Anspruch 7 oder 9, **dadurch gekennzeichnet, dass** an einem oberen Teil der Innenschicht (43) eine ausladende Oberfläche (431) gebildet ist.

12. Der Aufbau der Positionierzwinge nach Anspruch 8, **dadurch gekennzeichnet, dass** an einem oberen Teil der Innenschicht (43) eine ausladende Oberfläche (431) gebildet ist.

## Revendications

1. Structure de positionnement d'embout d'un rayon de jante, comprenant une virole (40), où la virole (40) est une pièce circulaire creuse composé de deux parties, une face intérieure (43) et une face extérieure (41) qui sont intégralement estampées. La surface extérieure (41) est munie une bride externe (42) plus large que le trou (31) d'une jante (30), positionnée sur l'extrémité supérieure de la face externe (41). La surface intérieure (43) possède une bride interne (44) qui est elle positionnée sur l'extrémité supérieure de la surface interne (43), chevauchant ainsi une partie du rebord extérieur (42). Les parties inférieures des surfaces, interne (43) et externe (41), sont formées intégralement et présentent un ensemble de lignes de coupes longitudinales (45) formant une section d'insertion composée de deux couches (46).

2. La structure de positionnement de l'embout telle que revendiquée en 1, où la bride interne (44) est plus petite que a bride externe (42) et recouvre en partie la bride externe (42) afin de former une configuration en étages.

3. La structure de positionnement de l'embout telle que revendiquée en 1 , où la bride interne (44A) est rattaché à la face extérieure de la bride externe (42).

4. La structure de positionnement de l'embout telle que revendiquée en 1 , où la bride interne (44B) est adjacent à la bride externe (42), et les brides, interne (44B) et externe (44B), sont de hauteur identique.

5. La structure de positionnement de l'embout telle que revendiquée en 1 , où la bride interne (44C) recouvre une partie de la bride externe (42).

6. La structure de positionnement de l'embout telle que revendiquée en 1 , où la face interne (43) est dotée d'une bride de serrage (434) sur la partie supérieure, et le rebord interne (44C) recouvre la bride externe (42).

7. La structure de positionnement de l'embout telle que revendiquée en 1, 2, 3, 4, 5 ou 6, où la virole (40) possède des saillies de renforcement (432) qui sont disposées sur la surface interne (43) et entre les lignes de coupe (45) de la section d'insertion (46).

8. La structure de positionnement de l'embout telle que revendiquée en 1, 2, 3, 4, 5 ou 6, où une partie de renforcement en forme d'anneau (24) est située entre la tête du rayon connecteur (20) et la section d'insertion (46).

9. La structure de positionnement de l'embout telle que revendiquée en 7 , où la partie de renforcement en forme d'anneau (24) est située entre la tête du rayon connecteur (20) et la section d'insertion (46).

10. La structure de positionnement de l'embout telle que revendiquée en 1, 2, 3, 4, 5 ou 6, où la face interne (43) possède une surface évasée (431) au niveau de la partie supérieure.

11. La structure de positionnement de l'embout telle que revendiquée en 7 ou 9, où la face interne (43) possède une surface évasée (431) au niveau de la partie supérieure.

12. La structure de positionnement de l'embout telle que revendiquée en 8 , où la face interne (43) possède une surface évasée (431) au niveau de la partie supérieure.
